# EUROPEAN PATENT APPLICATION

(11) **EP 2 168 839 A1**
(43) Date of publication of application: **31.03.2010**
(21) Application number: 08165177.0
(22) Date of filing: 25.09.2008
(51) Int. Cl.: B61L 23/04, G01S 17/93

(54) **A railway obstacle detecting system, a method of detecting a railway obstacle and a computer program product**

(71) Applicant: Nederlandse Organisatie voor Toegepast- Natuurwetenschappelijk Onderzoek TNO, 2628 VK Delft (NL)
(72) Inventor: van den Heuvel, Johannes Cornelis, 2652 GC Berkel en Rodenrijs (NL)
(74) Representative: Hatzmann, Martin

(57) **Abstract**

The invention relates to a railway obstacle detecting system disposable on-board a railway vehicle that is transportable via railway tracks. The system comprises a laser source for generating a laser beam, a transmitting unit for transmitting the generated laser beam away from the railway vehicle, and a receiving unit for receiving any laser beam being reflected by a railway obstacle. Further, the system comprises a signal processing unit for determining whether a reflected laser beam has been received. The transmitting unit is arranged for transmitting the laser beam substantially parallel with the railway tracks.

## Description

The invention relates to a railway obstacle detecting system disposable on-board a railway vehicle that is transportable via railway tracks, the system comprising a laser source for generating a laser beam, a transmitting unit for transmitting the generated laser beam away from the railway vehicle, a receiving unit for receiving any laser beam being reflected by a railway obstacle, and a signal processing unit for determining whether a reflected laser beam has been received.

Objects on a railroad might form a security threat when colliding with the railway vehicle. As an example of such objects, a device can be present on a railway that might cause a train to derail. Further, unsuspecting pedestrians or livestock can be in the way of on-coming trains. As railway vehicles, such as trains, might have a considerable mass, the braking distance is relatively long, extending to 1 km or more. In order to timely observe obstacles on the railway, several systems have been implemented to assist the vehicle driver in his or her visual inspection activities.

More specifically, camera systems and radar systems have been developed for monitoring railway blocks. However, such camera and radar systems commonly lack stability in terms of generating false alarms. Also, radar systems have been mounted in front of a railway vehicle. The performance of the latter radar systems is, however, poor due to clutter generated by the metal of the railway tracks.

The International patent publication WO 2004/026660 discloses a rail obstacle detecting system according to the preamble that can be mounted on a railway vehicle for observing obstacles on the railway. The system comprises a laser system scanning both in horizontal and vertical direction in order to detect an object by receiving a reflected laser signal and generating an image based on synchronization information.

To generate the image, a two-dimensional laser scanner is required being provided with a laser source generating a relatively laser pulse rate, so that a minimum refreshing rate of the image is obtained. Further, considerable processing power is required to generate the image sequence.

It is an object of the invention to provide a railway obstacle detecting system according to the preamble, wherein the disadvantages identified above are reduced. In particular, the invention aims at obtaining a system according to the preamble that is more efficient. Thereto, according to the invention, the transmitting unit is arranged for transmitting the laser beam substantially parallel with the railway tracks.

By transmitting the laser beam substantially parallel with the railway tracks, information concerning objects on or near the railway tracks can be detected without generating a two-dimensional image based on two-dimensional laser beams, thereby reducing complexity in the laser system geometry, relaxing laser pulse rate requirements and reducing the processing power need. As a result, the efficiency of the detecting system increases, since the performance can be maintained using a simpler, cheaper and more robust architecture.

The invention also relates to a method of detecting a railway obstacle.

Further, the invention relates to a computer program product.

Other advantageous embodiments according to the invention are described in the following claims.

By way of example only, embodiments of the present invention will now be described with reference to the accompanying figures in which
Fig. 1 shows a schematic side view of a railway vehicle provided with a railway obstacle detecting system according to the invention;
Fig. 2 shows a schematic cross sectional view of a railway track;
Fig. 3 shows a schematic top view of the railway vehicle of Fig. 1;
Fig. 4 shows a block scheme of an embodiment of the railway obstacle detecting system according to the invention; and
Fig. 5 shows laser beam signals as a function of time.

It is noted that the figures shows merely preferred embodiments according to the invention. In the figures, the same reference numbers refer to equal or corresponding parts.

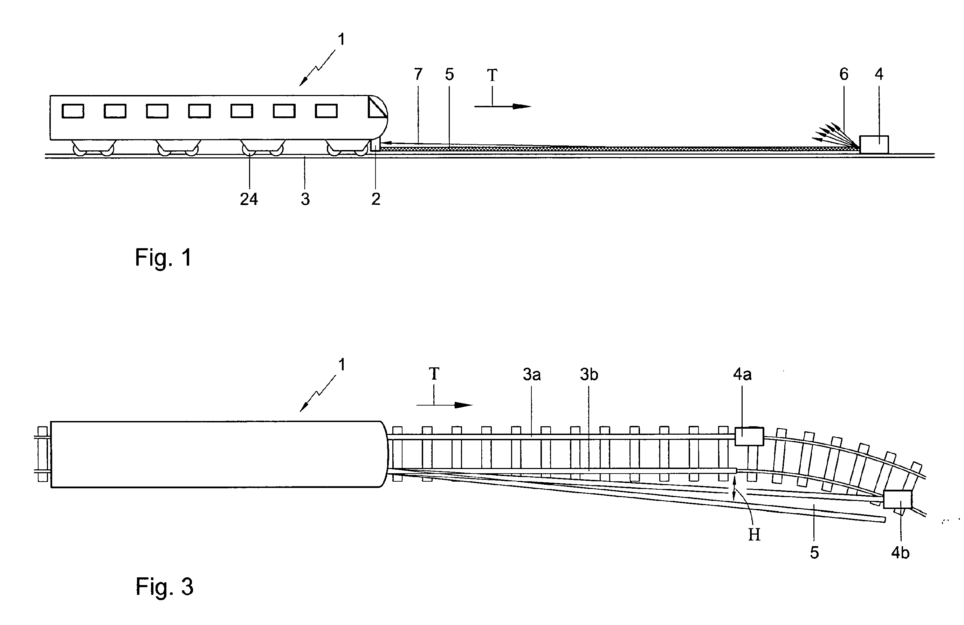

Figure 1 shows a schematic side view of a railway vehicle 1 provided with a railway obstacle detecting system 2 according to the invention. The railway vehicle 1, implemented as a train, is travelling on a railway road comprising a pair of railway tracks 3 in a travelling direction T. In front of the train 1, an obstacle 4 is present on a railway track 3. The railway obstacle detecting system 2 is intended to detect the obstacle 4 timely so that the train 1 can be stopped before reaching the obstacle 4.

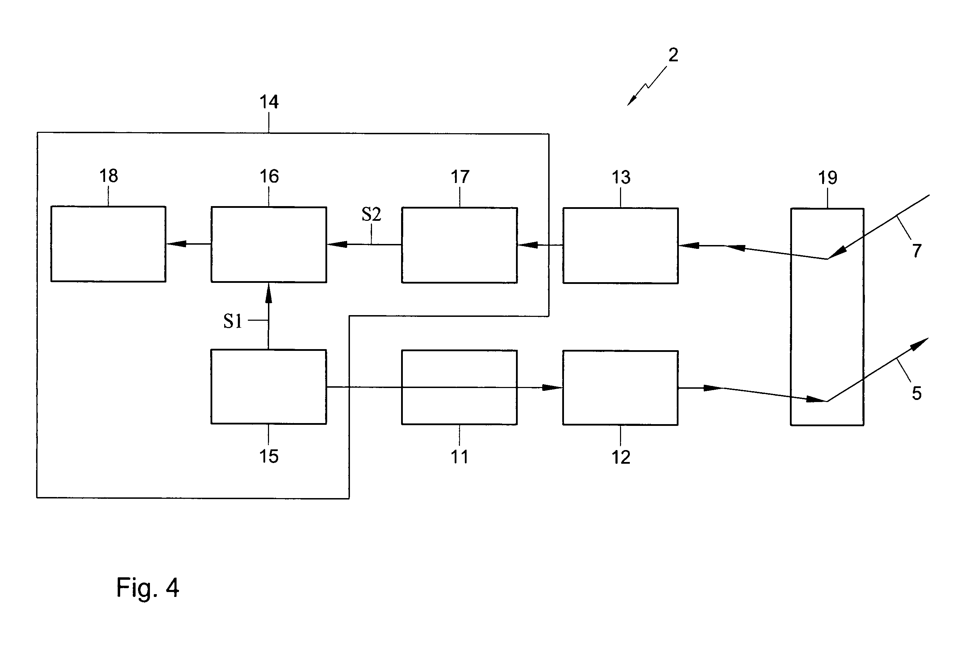

Further, Figure 4 shows a block scheme of an embodiment of the railway obstacle detecting system 2 according to the invention. The system 2 comprises a laser source 11, a transmitting unit 12, a receiving unit 13 and a signal processing unit 14. The laser source 11 is arranged for generating a pulsed optical signal in the IR range. The transmitting unit 12 is arranged for transmitting the generated laser beam away and ahead from the railway vehicle 1 in the travelling direction T of the train 1, substantially parallel with the railway tracks 3. Further, the receiving unit 13 is arranged for receiving any laser beam being reflected by a railway obstacle, while the signal processing unit 14 is arranged for determining whether a reflected laser beam has been received.

During operation of the detection system 2, the generated laser beam is transmitted forwardly, in the travelling direction T of the train 1, substantially parallel with the railway tracks 3. When the transmitted beam 5 reaches an obstacle 4, the laser beam is scattered. The scattered beam 6 comprises a reflected laser beam 7 that is received by the receiving unit 13 of the detection unit 2 provided on the train 1. Then, the signal processing unit 14 determines that a reflected laser beam 7 has been received, thereby detecting the obstacle 4.

By applying a pulsed laser signal, time intervals between transmission of the laser beam and arrival of a corresponding reflected laser beam can relatively easily be retrieved. However, also other techniques can be applied to determine said time intervals, e.g. modulation of the laser signal. Further, instead of generating optical signals in the IR range, signals having other wavelengths can be generated, e.g. green light.

It is noted that, in principle, the generated laser beam can also be transmitted backwards, in a direction opposite to the travelling direction T of the train 1 for detecting objects on the rear side of the train 1, e.g. when the travelling direction of the train 1 is changed.

The transmitting unit 12 is provided with a relatively small numerical aperture, more specifically a numerical aperture of approximately 0.1 mrad. However, also a transmitting unit 12 having other numerical apertures can be applied, e.g. 0.5 mrad. By applying a relatively small numerical aperture, the transmitted laser beam 5 has a low divergence. Due to the focussing character of the laser beam 5, the optical energy is efficiently used, as objects remote from the railway are not impinged so that less interesting or even disturbing information is removed from reflected laser signals. Moreover, the cross sectional view of the transmitted beam 5 with respect to the railway tracks 3 remains substantially invariant over a relatively long distance, thereby providing a detection system that optimally benefits from the generally flat and straight properties of railway tracks. As a result, by using low divergence laser beam information, an energetically efficient system is obtained that is able to detect obstacles on the railroad that are far removed, thereby improving the safety of the train 1. By using a numerical aperture of approximately 0.1 mrad, the cross sectional laser beam diameter might increase with approximately with 10 cm after a propagation path of 1 km. In this context, it is noted that, as an alternative, the receiving unit 13 is provided with a relatively small numerical aperture, thereby filtering relevant information from all reflected laser beams. In principle, also both the transmitting unit 12 and the receiving unit 13 can be provided with a relatively small numerical aperture. Further, it is noted that relatively large numerical apertures can be applied, e.g. when it is desired to also monitor structures side wards to the railroad, such as walls.

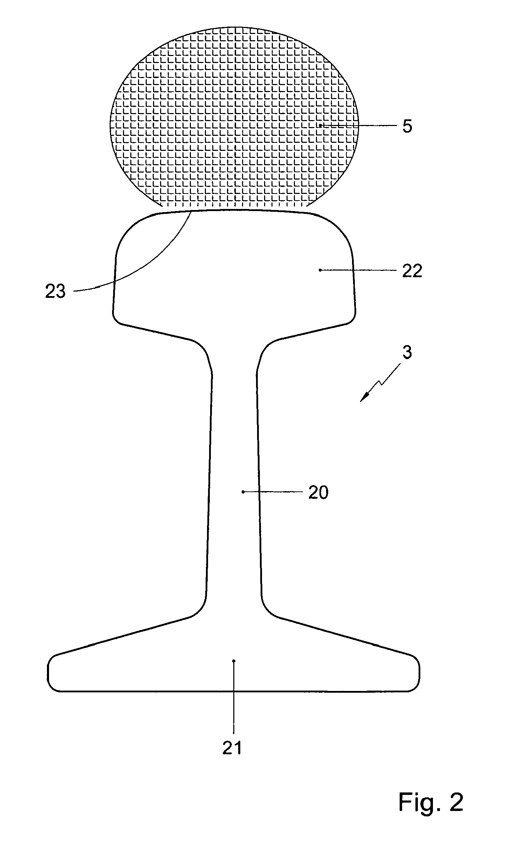

Figure 2 shows a schematic cross sectional view of a railway track 3. The track 3 comprises a track body 20 that is supported by a track feet 21. The track body 20 bears a track shoulder 22 having an upper surface 23 forming the actual rail platform for the train wheels 24. As shown in Figure 2, the propagation path of the transmitted laser beam 5 is located near the railway track 3, more specifically the propagation path of the transmitted laser beam 5 is located just above the railway track 3, in the shown embodiment just above the upper surface 23 of the track shoulder 22.

By locating the laser beam path of the transmitted laser beam 5 near the railway track 3, obstacles near the railway track 3 can efficiently be detected. Further, by locating the laser beam path of the transmitted laser beam 5 just above the railway track 3, obstacles on the railway track 3 forming a potential danger for the train's safety can efficiently be detected. Obviously, the laser beam path of the transmitted laser beam 5 can also be located in other positions, such as between the pair of railway tracks 3.

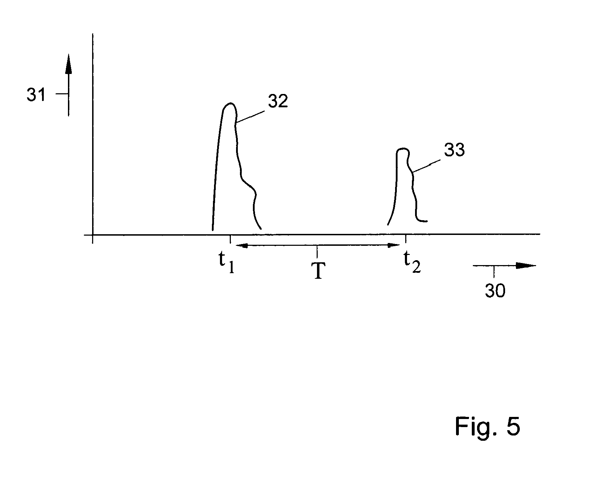

As shown in Figure 4, the signal processing unit 14 comprises a trigger 15 for triggering the laser source 11 to generated laser signal. The signal processing unit 14 further comprises a counter 16 that is reset by a start signal S1 from the trigger 15. The signal processing unit 14 also comprises a detection unit 17 that sends a stop signal S2 to the counter 16 to stop the counter 16. During operation of the system 2, a time interval T is determined between a time instant t1 when a laser beam signal 32 is transmitted and a time instant t2 when a corresponding reflected laser beam 33 is received. Figure 5 shows the amplitude 31 of the transmitted laser beam 32 and the reflected laser beam 33 as a function of time 30. Based on the determined time interval T a distance between the train 1 and the obstacle 4 is estimated. It is noted that the system 2 according to the invention can also be provided without a distance estimating feature, e.g. for obtaining a cheaper system 2.

The signal processing unit 14 further comprises a processor 18 for further processing data provided by the counter, such as performing the distance estimation and/or storing obstacle data.

Optionally, the transmitting unit 12 and the receiving unit 13 comprise a vertical tilting module for adjusting a laser beam direction in a vertical plane, so that a desired location relative to the rail track 3 can also be monitored in height varying sections of the railway, e.g. when travelling through a channel.

As a further option, the system 2 comprises a multiple number of transmitting units and/or a multiple number of receiving units arranged in a substantially horizontal array, thereby allowing sensing the presence of an obstacle in an area, e.g. in an, in cross sectional view, elongate area between the pair of railway tracks 3.

Figure 3 shows a schematic top view of the train 1 in a bended railway section. The pair of railway tracks 3a, 3b provide a bend to the right, when viewed in the travelling direction T. In the shown embodiment, the system 2 comprises a scanning unit 19 that is arranged for scanning in a horizontal direction H, e.g. between the railway tracks 3a, 3b, thereby providing a feature of sensing the presence of any obstacle in an area, as an alternative to applying a multiple number of transmitting units and/or receiving units. Further, railway tracks 3a, 3b can be sensed in bend sections, e.g. controlled by a railway track tracking system. As a result, also obstacles 4a, 4b in bended sections can efficiently be detected.

It is noted that the processing steps mentioned above can be performed either by dedicated hardware or by standard hardware that is loaded with software suitable for performing the data processing tasks.

The invention is not restricted to the embodiments described herein. It will be understood that many variants are possible.

Though the described embodiments relate to trains, the railway obstacle detecting system according to the invention can also be applied in combination with other railway vehicles, such as tramcars or underground vehicles.

Further, the system according to the invention might be arranged for initiating an alarm phase signal upon receipt of a reflected laser beam, such as a beep signal or a brake activation signal. Further, one or a multiple number of monitoring systems can be activated, e.g. a video system to characterize the detected object.

Other such variants will be obvious for the person skilled in the art and are considered to lie within the scope of the invention as formulated in the following claims.

## Claims

1. A railway obstacle detecting system disposable on-board a railway vehicle that is transportable via railway tracks, the system comprising:
- a laser source for generating a laser beam,
- a transmitting unit for transmitting the generated laser beam away from the railway vehicle,
- a receiving unit for receiving any laser beam being reflected by a railway obstacle, and
- a signal processing unit for determining whether a reflected laser beam has been received,
wherein the transmitting unit is arranged for transmitting the laser beam substantially parallel with the railway tracks.

2. A system according to claim 1, wherein the transmitting unit and/or the receiving unit has a relatively small numerical aperture.

3. A system according to claim 2, wherein the numerical aperture of the transmitting unit and/or the receiving unit is approximately 0.1 mrad.

4. A system according to any of the previous claims, wherein the transmitting unit and the receiving unit comprise a vertical tilting module for adjusting a laser beam direction in a vertical plane.

5. A system according to any of the previous claims, comprising a multiple number of transmitting units and/or a multiple number of receiving units arranged in a substantially horizontal array.

6. A system according to any of the previous claims, wherein the laser source is arranged for generating a pulsed signal.

7. A method of detecting a railway obstacle, comprising the steps of:
- generating a laser beam on-board a railway vehicle that is transportable via railway tracks,
- transmitting the laser beam away from the railway vehicle,
- receiving any laser beam being reflected by a railway obstacle, and
- determining whether a reflected laser beam has been received,
wherein the laser beam is transmitted substantially parallel with the railway tracks.

8. A method according to claim 7, wherein the determining step comprises using low divergence laser beam information.

9. A method according to claim 7 or 8, wherein the propagation path of the transmitted laser beam is located near a railway track.

10. A method according to any of claims 7-9, wherein the propagation path of the transmitted laser beam is located just above a railway track.

11. A method according to any of claims 7-10, wherein the transmitted laser beam is directed in a travelling direction of the railway vehicle.

12. A method according to any of claims 7-11, further comprising estimating a distance between the railway vehicle and the obstacle, based on a time interval between a time instant of transmitting a laser beam and a time instant of receiving a corresponding reflected laser beam.

13. A method according to any of claims 7-12, further comprising scanning in a horizontal direction.

14. A method according to any of claims 7-13, further comprising initiating an alarm phase signal upon receipt of a reflected laser beam.

15. A computer program product comprising computer readable code for causing a processor to perform a method of detecting a railway obstacle, comprising the steps of:
- generating a laser beam on-board a railway vehicle that is transportable via railway tracks,
- transmitting the laser beam away from the railway vehicle,
- receiving any laser beam being reflected by the railway obstacle,
- determining whether a reflected laser beam has been received,
wherein the laser beam is transmitted substantially parallel with the railway tracks.
